# EUROPÄISCHE PATENTSCHRIFT

(11) **EP 0 336 350 B1**
(45) Veröffentlichungstag und Bekanntmachung des Hinweises auf die Patenterteilung: **17.08.1994**
(21) Anmeldenummer: 89105845.5
(22) Anmeldetag: 04.04.1989
(51) Int. Cl.: G01N 21/89

(54) **Vorrichtung zur optischen Inspektion von bewegten Materialoberflächen**
Device for the optical inspection of moving surfaces
Dispositif d'inspection optique de surfaces mouvantes de matériaux

(30) Priorität: 06.04.1988 DE 3811563
(43) Veröffentlichungstag der Anmeldung: 11.10.1989
(73) Patentinhaber: FRAUNHOFER-GESELLSCHAFT ZUR FÖRDERUNG DER ANGEWANDTEN FORSCHUNG E.V., 80636 München (DE)
(72) Erfinder: Schweizer, Werner, Dr., D-7800 Freiburg (DE); Molnar, Josef, D-7801 Umkirch (DE); Höfler, Heinrich, Dr., D-7835 Teningen (DE)
(74) Vertreter: Rackette, Karl, Dipl.-Phys. Dr.-Ing

(56) Entgegenhaltungen:
- EP-A- 0 071 202
- US-A- 3 695 771
- US-A- 3 781 531
- US-A- 4 092 068
- MELLIAND TEXTILBERICHTE, Band 3, 1982, Seiten 198-202; D. RÖSS: "Automatische Oberflächeninspektionssysteme mit Laser-Scanner"

## Beschreibung

Die Erfindung betrifft eine Vorrichtung zur optischen Inspektion von bewegten Materialoberflächen, mit einem die Materialoberfläche periodisch und entlang einer Abtastlinie quer zur Materialbewegungsrichtung abtastenden Abtaststrahl, mit einer Lichtempfängeranordnung zur Aufnahme des beim Überstreichen der Materialoberfläche reflektierten Lichtes, wobei die Lichtempfängeranordnung zwei einander zugeordnete, mit einer Signalverarbeitungseinrichtung verbundene, optoelektronische Detektoranordnungen umfaßt, die beidseitig der zu inspizierenden bewegten Materialoberfläche angeordnet und mit ihren optischen Achsen fluchtend mit der Abtastlinie auf die Materialoberfläche ausgerichtet sind.

Eine solche Vorrichtung ist aus der EP 0 071 202 A1 bekannt, bei der jeweils solche Detektoranordnungen fluchtend zu beiden Seiten einer sich vorbeibewegenden Glasplatte vorgesehen sind. Dabei durchstrahlt der Abtaststrahl das im wesentlichen transparente Glas. Bei Fehlstellen in diesem Glas wird der Abtaststrahl dergestalt z.B. an einer Blase umgelenkt, so daß er mit Hilfe von Totalreflektionen innerhalb der Glasplatte zu den seitlichen Detektoranordnungen geführt wird.

Ein weiteres automatisches Oberflächeninspektionssystem mit Laser-Scanner ist in Melliand Textilberichte 3/1982, Seiten 198 - 202 beschrieben. Dies gestattet es, eine Vielzahl unterschiedlicher Fehler in der Oberfläche von nicht-transparenten Warenbahnen zu erfassen. Bei der bekannten Vorrichtung wird das Licht eines Lasers mit Hilfe eines rotierenden Polygonspiegels über eine Abtastlinie quer zur Materialbewegungsrichtung einer Materialbahn abgelenkt. Bei einer telezentrischen Anordnung befindet sich der Polygonspiegel im Brennpunkt eines Parabolspiegels, so daß der Auftreffwinkel auf die Materialoberfläche im ganzen Abtastbereich gleich ist. Das von der Materialoberfläche reflektierte Licht wird über eine Zylinderlinse in einen als Konzentrator wirksamen Lichtleiterstab eingespeist, der optisch mit einem Photomultiplier gekoppelt ist. Der Photomultiplier speist eine Auswerteelektronik, die Intensitätsänderungen des zurückgeworfenen Lichtes auswertet, um Oberflächeninformationen, Vertiefungen, Erhebungen, Rauhstellen usw. zu entdecken Die in einem Fehleranalysator erkannten Fehlersignale laufen anschließend mit stark verringerter Datenrate in einen Prozessor, der periphere Einheiten ansteuert, die Fehler am Rand des Materials markieren und über Bildschirm oder Drucker ein Protokoll der erkannten Fehler erzeugen.

Bei einem Oberflächeninspektionssystem der oben beschriebenen Art kann der intensitätsmäßige Unterschied im Fehlerbereich zur normalen Oberfläche so gering sein, daß eine Erkennung oft nicht möglich ist Eine erhöhte Empfindlichkeit kann dadurch erreicht werden, daß man zwei oder mehrere Detektoren verwendet und mittels elektronischer Datenauswertung einen Vergleich mit einem Normalmuster macht Aber auch dabei wird bestenfalls die Ausdehnung einer Fehlerstelle erfaßt, ohne etwas über die Art des Oberflächendefektes auszusagen. In vielen Fällen ist es jedoch wesentlich, die Fehlerart identifizieren zu können, um echte Strukturfehler wie zum Beispiel Risse oder ähnliches von weniger bedeutenden Fehlern wie zum Beispiel Farbabweichungen unterscheiden zu können.

Aus der US 3,695,771 ist eine Vorrichtung bekannt, mit der die Existenz von seitlichen Graten bei metallischen Werkstücken nachweisbar ist.

Die US 4,092,068 lehrt einen über zwei Detektoranordnungen verfügenden Oberflächensensor zur Beurteilung der Rauhigkeit von Papierbahnen.

Die US 3,781,531 beschreibt eine Signalverarbeitungseinrichtung im Zusammenhang mit einer Fehlstellenerkennungsvorrichtung von durchsichtigen Materialbahnen, bei der ein analoges Fehlstellensignal mit Hilfe eines Schwellwertschaltkreises in ein digitales Signal umgewandelt wird.

Ausgehend von diesem Stand der Technik liegt der Erfindung die Aufgabe zugrunde, eine Vorrichtung der eingangs genannten Art zu schaffen, die es gestattet, an schnell bewegten flächenhaften Bahnen oder rotierenden zylindrischen Körpern aus unterschiedlichen Materialien wie beispielsweise Textilien, Papier, Folien, Glas und Metall Oberflächendefekte wie Erhebungen, Vertiefungen, Risse, Löcher usw. festzustellen, zu unterscheiden und räumlich zu lokalisieren.

Diese Aufgabe wird erfindungsgemäß dadurch gelöst, daß die Detektoranordnungen über jeweils ein Linsensystem zur Abbildung der Abtastlinie auf die Detektoren verfügen und daß die Signalverarbeitungseinrichtung zur Erfassung der Zeitpunkte der Amplitudenveränderung der Ausgangssignale über einen Schwellwert hinaus zwei bistabile Multivibratoren mit jeweils einem Takteingang aufweist, deren Setz- bzw Rücksetz-Eingänge mit einem Detektorsignal und dem invertierten jeweils anderen Detektorsignal beaufschlagt sind, wobei die erste an einem der bistabilen Multivibratoren auftretende, auf einen Oberflächendefekt hinweisende Amplitudenveränderung den Takteingang des jeweils anderen bistabilen Multivibrators sperrt.

Durch die erfindungsgemäße Anordnung wird das reflektierte Licht des Abtaststrahles gleichzeitig von zwei einander gegenüberstehenden optoelektronischen Anordnungen beobachtet, deren gemeinsame optische Achse mit der Bahn des Abtastlichtpunktes deckungsgleich ist Durch die Linsensysteme wird die Abtastlinie auf den jeweiligen Detektor neben der Materialbahn abgebildet Innerhalb eines begrenzten Tiefenschärfebereiches handelt es sich um ein abbildendes System.

Eine momentan beleuchtete Fehlerstelle ergibt in den optoelektronischen Detektoranordnungen unterschiedliche Signale, aus deren zeitlichem und intensitätsmäßigem Ablauf die gewünschten Aussagen über die Beschaffenheit und die Lage der betrachteten Fehlerstelle gemacht werden können.

Zweckmäßige Ausgestaltungen und Weiterbildungen der Erfindung sind in den Unteransprüchen gekennzeichnet.

Nachfolgend werden Ausführungsbeispiele der Erfindung anhand der Zeichnung näher beschrieben. Es zeigen:
- Fig. 1: die erfindungsgemäße Vorrichtung schematisch in einem Schnitt quer zur Transportrichtung des zu überwachenden Materials,
- Fig. 2: den Signalverlauf in den beiden Detektoranordnungen bei einer Abtastung von links nach rechts in Fig 1,
- Fig. 3: den Signalverlauf in einer der Fig. 2 entsprechenden Darstellungsweise bei einer Abtastung von rechts nach links in Fig. 1,
- Fig. 4: eine Abwandlung der Inspektionsvorrichtung gemäß Fig. 1 mit einem immer lotrecht einfallenden Abtaststrahl und einer gegebenenfalls vorhandenen dritten Detektoranordnung für die Abtastung von teilweise spiegelnden Materialien,
- Fig. 5: eine Signalverarbeitungseinrichtung einer Inspektionsvorrichtung zum Klassifizieren von Oberflächenfehlern und
- Fig. 6: den zeitlichen Verlauf diverser Signale in der Inspektionsvorrichtung gemäß Fig. 1.

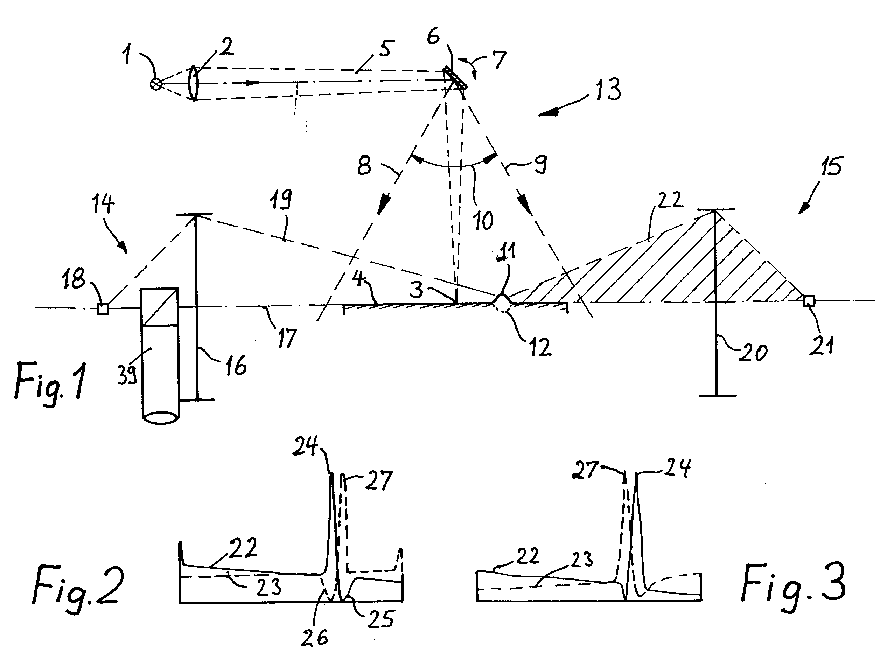

Die in Fig. 1 schematisch dargestellte Vorrichtung zur optischen Inspektion von bewegten Materialoberflächen verfügt als Lichtquelle über eine Laserdiode 1, der eine Abbildungsoptik 2 zugeordnet ist, die die Laserdiode 1 als Abtastfleck 3 mit einem Durchmesser von beispielsweise 1 Mikrometer oder 1 Millimeter auf die Materialoberfläche 4 abbildet. Der Laserstrahl 5 wird dabei mit Hilfe eines Schwingungsspiegels 6, der beispielsweise als Resonanzschwinger mit 800 Hz um eine rechtwinklig zur Zeichenebene verlaufende Achse in Richtung des Doppelpfeils 7 schwingt, umgelenkt. Der Abtastwinkel zwischen zwei Randstrahlen 8, 9 ist durch einen Doppelpfeil 10 in der Zeichnung veranschaulicht. Der Abtastfleck 3 beschreibt auf der Materialoberfläche 4 bei der durch den Schwingungsspiegel 6 erzeugten Abtastbewegung eine Abtastlinie, die sich in Fig. 1 entlang der Materialoberfläche 4 in der Zeichenebene zwischen den Randstrahlen 8 und 9 erstreckt. Bei der Materialoberfläche 4 handelt es sich beispielsweise um eine Warenbahn eines textilen Gewebes, eine Kunststoffolie, eine Papierbahn, eine Glasbahn, eine Metallbahn oder um die Oberfläche eines rotierenden zylindrischen Körpers.

Auf der Materialoberfläche 4 ist übertrieben stark eine Erhebung 11 als Oberflächendefekt dargestellt. Eine Vertiefung 12 ist gestrichelt an der gleichen Stelle dargestellt. Bei dem durch die Erhebung 11 bzw. die Vertiefung 12 dargestellten Oberflächendefekt kann es sich auch um einen Riß, ein Loch oder eine ausgerissene Faser an einem Textilband handeln.

Der oben beschriebenen Beleuchtungseinrichtung 13 und der Materialoberfläche 4 sind eine erste optoelektronische Detektoranordnung 14 und eine zweite optoelektronische Detektoranordnung 15 zugeordnet. Die erste optoelektronische Detektoranordnung 14 weist ein Linsensystem 16 auf, dessen optische Achse 17 mit der in der Zeichenebene entlang der Materialoberfläche 4 verlaufenden Abtastlinie fluchtet. Auf der von der Materialoberfläche 4 wegweisenden Seite des Linsensystems 16 ist ein Detektor 18, der als Ein- oder Mehrelementdetektor ausgebildet ist, angeordnet. Die von der Materialoberfläche 4 in einen der ersten optoelektronischen Detektoranordnung 14 zugeordneten Halbkegel 19 gestreute Strahlung wird vom Linsensystem 16 auf den Detektor 18 fokussiert.

Zur Justierung der Anordnung dient ein einschwenkbares Justierfernrohr 39, das in Fig. 1 schematisch dargestellt ist und mit dem die optische Achse 17 exakt mit der zu untersuchenden Materialoberfläche 4 und dem auf ihr wandernden Lichtfleck zur Deckung gebracht werden kann. Die in Fig. 1 auf der rechten Seite gezeigte zweite optoelektronische Detektoranordnung 15 ist entsprechend der ersten Detektoranordnung 14 aufgebaut und verfügt über ein Linsensystem 20 und eine Detektor 21. Die über einen Halbkegel 22 gestreute Strahlung, von der in Fig. 1 der Verlauf eines Strahles dargestellt ist, wird vom Linsensystem 20 gesammelt und auf den zweiten Detektor 21 abgebildet.

Die Detektoren 18 und 21 sind mit einer Signalverarbeitungseinrichtung verbunden, die eine Klassifizierung der Oberflächendefekte nach Art und Ausdehnung gestattet. Im Falle zum Beispiel der Unterscheidung von Erhebungen 11 und Vertiefungen 12 bzw. Löchern in der Materialoberfläche 4 speisen die Detektorsignale Mono-Flip-Flops, die die Detektorsignale auf eine geeignete Impulsbreite bringen und zwei parallel laufende Zähler ansteuern. Im Falle einer Fehlstellenerhebung wird der erste Zähler durch das Signal des ersten Detektors 18 gestartet und durch das Signal des zweiten Detektors 21 gestoppt, wobei die Zahl der während dieser Zeit gezählten Taktgeneratorimpulse die Ausdehnung der Erhebung 11 anzeigt. Im Falle einer Vertiefung tritt der zweite Zähler in Funktion und der Ablauf ist umgekehrt. Der zweite Detektor 21 liefert dann den Startimpuls und der erste Detektor 18 den Stopimpuls.

Fig. 2 zeigt den zeitlichen Signalverlauf 22 des ersten Detektors 18 und den zeitlichen Signalverlauf 23 des zweiten Detektors 21 für eine Abtastlinie mit der Erhebung 11. Bei einem in Fig. 1 von links nach rechts wandernden Abtastfleck 3 ergibt sich zunächst ein abfallender Signalverlauf 22, da das diffus gestreute Licht von einem immer weiter weg liegenden Abtastfleck 3 herrührt. Wenn der Abtastfleck 3 auf der in Fig. 1 nach links weisenden Flanke der Erhebung 11 zu liegen kommt, gelangt mehr Streulicht in den Detektor 18, so daß am Ausgang des Detektors 18 eine Impulsspitze 24 auftritt. Wenn sich der Abtastfleck 3 auf der gegenüberliegenden Flanke der Erhebung 11 befindet, ergibt sich im Signalverlauf 22 eine Vertiefung 25. Bei der weiteren Wanderung des Abtastflecks 3 gelangt schließlich wieder mehr Streulicht zum Detektor 18, wobei die Intensität jedoch mit der Entfernung weiter abnimmt.

Fig. 2 zeigt gestrichelt den Intensitätsverlauf am zweiten Detektor 21. Die Intensität des gestreuten Lichtes zeigt bei einer Abtastbewegung von links nach rechts zunächst stetig an, bis sich aufgrund des Abschattungseffektes der Erhebung 11 ein Signalabfall 26 ergibt, dem eine Impulsspitze 27 folgt, wenn der Abtastfleck 3 sich auf der in Fig. 1 nach rechts zum zweiten Detektor 21 weisenden Flanke der Erhebung 11 befindet.

Aus den obigen Erörterungen ergibt sich, daß die Impulsspitzen 24 und 27 an den Detektoren 18, 21 zeitlich versetzt auftreten und einerseits eine Information über die Lage der Erhebung 11 entlang der Abtastlinie enthalten. Andererseits ergibt sich aus dem Abstand der Impulsspitzen 24 und 27 die Ausdehnung der Erhebung 11 in Abtastrichtung. Schließlich ergibt sich daraus, daß die Impulsspitze 24 am ersten Detektor 18 vor der Impulsspitze 27 am zweiten Detektor 21 auftritt eine Möglichkeit zur Klassifizierung des Oberflächendefektes als Erhebung.

Wenn es sich bei dem Oberflächendefekt nicht um eine Erhebung 11, sondern um eine Vertiefung 12 handelt, ergibt sich der in Fig. 3 dargestellte Signalverlauf 22 mit einer Impulsspitze 24, die zeitlich nach der Impulsspitze 27 am zweiten Detektor 21 auftritt. Um zwischen einer Erhebung 11 und einer Vertiefung 12 zu unterscheiden, genügt es daher, wenn die die Signale der Detektoren 18, 21 auswertende Signalverarbeitungseinrichtung die in den Fig. 2 und 3 dargestellten Signalverläufe auswertet.

Eine Fehlstelle führt somit je nach ihrer Art zu verschiedenen Signalabfolgen. Bei einem in Fig. 1 von links nach rechts wandernden Strahl sieht im Falle einer Erhebung 11 zuerst der erste Detektor 18 die Fehlstelle. Nach Überschreiten derselben erfolgt ein kurzzeitiger Abfall, während sich der Abtastfleck 3 im "Sichtschatten" des ersten Detektors 18 befindet. Für den zweiten Detektor 21 ist der Ablauf umgekehrt. Im Augenblick des Signalanstiegs des Signals am ersten Detektor 18 zeigt das Signal am zweiten Detektor 21 eine Signalabnahme und bei der Signalabnahme am ersten Detektor 18 steigt das Signal am zweiten Detektor 21 an. Im Falle von Vertiefungen oder Löchern sieht bei gleicher Abtastrichtung zuerst der zweite Detektor 21 und dann der Detektor 18 das reflektierte Licht. Die Signalabfolge ist also umgekehrt wir bei der Erhebung 11.

Bei geeigneter Wahl von Abtastfleckgröße, Schwingspiegelfrequenz und Bewegungsgeschwindigkeit des zu untersuchenden Materials kann eine Fehlerstelle bei der Rückschwingung nochmals erfaßt werden. Die Signalabfolge ist dann genau spiegelbildlich, wodurch die Erkennungssicherheit erhöht wird. Mittels geeigneter elektronischer Auswertung können auf diese Weise auch Störsignale weitgehend eliminiert werden.

Da die Fehlstellen näherungsweise auf die Detektoren 18, 21 abgebildet werden - wenn auch mit begrenzter Tiefenschärfe -, kann der Detektor 18 bzw. 21 je nach zu erwartender Fehlerart als Ein- oder Mehrelementdetektor ausgeführt sein.

Die geometrischen Verhältnisse der Beleuchtungseinrichtung und der optoelektronischen Anordnungen 14 und 15 ergeben sich aus der Art und der Ausdehnung der zu erkennenden Fehlstellen, wobei die Abtastfleckgröße, die Brennweite der Linsensysteme, deren Abstand von der zu beobachtenden Bandbreite des Materials und die Größe der lichtempfindlichen Flächen der Detektoren 18, 21 aufeinander abgestimmt sind. Bei Verwendung von Laserdioden mit fokussierender Optik lassen sind Abtastfleckgrößen bis in den Mikrometerbereich realisieren, so daß auch feine Risse in metallischen Oberflächen erfaßt werden können.

Bei Verwendung resonant schwingender Spiegel und schneller Detektoren 18, 21, zum Beispiel Lawinendioden, lassen sich lückenfreie Abtastungen bei hohen Materialgeschwindigkeiten erreichen. Bei einer Abtastfleckgröße von 1 mm Durchmesser ergibt sich eine flächendeckende Abtastung noch bei Geschwindigkeiten in der Größenordnung von 500 m/min.

Eine erhöhte Sicherheit der Unterscheidung von Erhebungen 11 und Vertiefungen 12 oder Löchern im untersuchten Material wird mit einem in der Zeichnung nicht gesondert dargestellten Ausführungsbeispiel erreicht, wenn die Detektoren 18, 21 jeweils aus drei passend dimensionerten, übereinander angeordneten Detektordioden gebildet sind. Der mittlere Detektor liegt dann genau auf der optischen Achse 17. Größere Erhebungen 11 oder Vertiefungen 12 werden im Verlauf der Abtastung auch in der darunter bzw. darüber liegenden Detektordiode angezeigt.

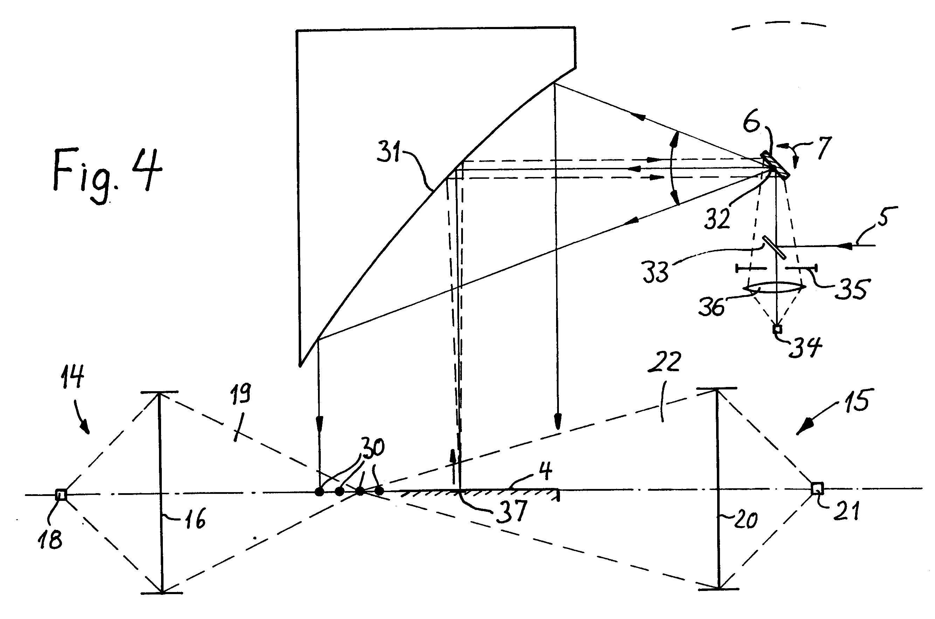

Fig. 4 zeigt ein Ausführungsbeispiel der Erfindung, bei dem die Materialoberfläche 4, die in Fig. 4 teilweise als Ebene und teilweise als nebeneinanderlaufende Fäden 30 dargestellt ist, immer mit rechtwinklig einfallendem Abtastlicht beaufschlagt wird. Dies wird mit Hilfe eines Parabolspiegels 31 erreicht, in dessen Brennpunkt 32 der Drehpunkt des Schwingspiegels 6 angeordnet ist. Auf diese Weise wird der Laserstrahl 5, der über einen Strahlteiler 33 angekoppelt wird, über den Parabolspiegel 31 immer senkrecht auf die Materialoberfläche 4 gelenkt.

Der Materialoberfläche 4 sind in der im Zusammenhang mit Fig. 1 beschriebenen Weise eine erste optoelektronische Detektoranordnung 14 und eine zweite optoelektronische Detektoranordnung 15 zugeordnet. Gleiche Bauteile sind mit gleichen Bezugszeichen wie in Fig. 1 versehen.

Bei teilweise spiegelnd reflektierenden Materialien kann in der Anordnung gemäß Fig. 4 ein dritter Detektor 34 mit einer Blende 35 und einer Abbildungsoptik 36 vorgesehen sein. Der dritte Detektor 34 wird mit dem direkt zurückgestreuten oder zurückgespiegelten Licht beaufschlagt, wodurch eine zusätzliche Oberflächeninformation gewonnen wird. Dabei können auch kleine Winkelabweichungen einer spiegelnden Fläche 37 von der optisch ebenen Fläche festgestellt werden, wenn statt eines Einzeldetektors ein flächiger Vielelementedetektor als dritter Detektor 34 verwendet wird.

Ergänzt man die in Fig. 4 dargestellte Anordnung dahingehend, daß auf der Materialrückseite spiegelbildlich zum Parabolspiegel 31 ein zweiter Parabolspiegel angeordnet wird, in dessen Brennpunkt ein schneller Detektor angeordnet ist, dann lassen sich Löcher in der Materialoberfläche 4 eines Materials nach Größe und Lage bestimmen.

Eine weitere, in der Zeichnung nicht dargestellte Ausgestaltung betrifft die Anordnung jeweils einer Detektorzeile normal zu der beobachteten Materialbahn anstelle jeweils eines Einzeldetektors. Mit dieser Anordnung erfassen die außerhalb der Ebene der Materialbahn angeordneten Detektoren Signale, die im Größenvergleich zu dem von dem in der Materialebene angeordneten Detektor erfaßten Signal, die Bestimmung der Höhe bzw. Tiefe der Fehlstelle gestatten.

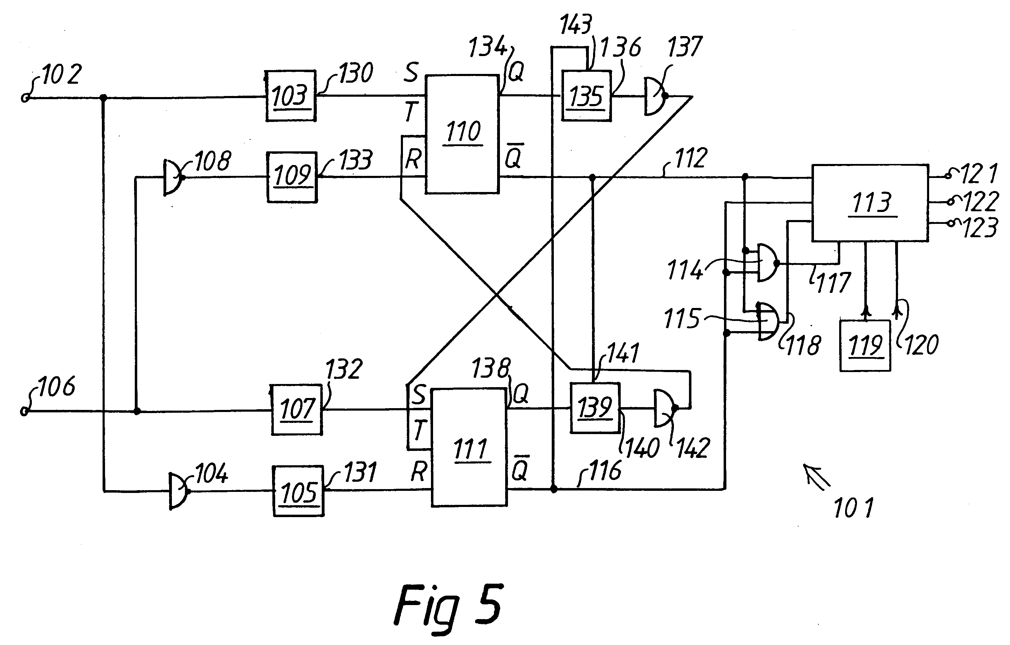

Die Fig. 5 zeigt eine an den Detektoren 18 und 21 anschließbare Signalverarbeitungseinrichtung 101, die das Klassifizieren von Oberflächenfehlern gestattet. Der Signalausgang des ersten Detektors 18 ist mit einem ersten Signaleingang 102 der Signalverarbeitungseinrichtung 101 verbunden. Der erste Signaleingang 102 ist an ein erstes pulsformendes Mono-Flop 103 und an einen ersten Inverter 104 angeschlossen. Das invertierte Signal des ersten Detektors 18, das am Ausgang des ersten Inverters 104 anliegt, beaufschlagt ein zweites Mono-Flop 105.

Der Signalausgang des zweiten Detektors 18 der Inspektionsvorrichtung nach Figur 1 ist mit einem zweiten Signaleingang 106 der Signalverarbeitungseinrichtung 101 verbunden. Der zweite Signaleingang 106 ist an ein drittes Mono-Flop 107 und an einen zweiten Inverter 108 angeschlossen. Das invertierte Signal des zweiten Detektors 21, das am Ausgang des zweiten Inverters 108 anliegt, beaufschlagt ein viertes Mono-Flop 109.

Die Mono-Flops 103, 105, 107 und 109 erzeugen aus den Anstiegsflanken der anliegenden Signale, die den Anstiegs- und Abstiegsflanken der Detektorimpulse 102 und 106 entsprechen und die in der Figur 2 in den zeitlichen Signalverläufen 22 und 23 für die beiden Detektoren 18 und 21 als Flanken der Impulsspitzen 24 und 27 dargestellt sind, kurze Rechteckimpulse einer Länge von ungefähr 100 Nanosekunden. Die Mono-Flops 103, 105, 107 und 109 können Univibratoren sein, die von der positiven Flanke des sie beaufschlagenden Eingangssignals getriggert werden.

Der Signalausgang 130 des ersten Mono-Flops 103 ist mit dem S-Eingang eines ersten Flip-Flops 110 und der Signalausgang 133 des vierten Mono-Flops 109 ist mit dem R-Eingang des ersten Flip-Flops 110 verbunden. Der Signalausgang 132 des zweiten Mono-Flops 105 ist mit dem S-Eingang eines zweiten Flip-Flops 111 und der Signalausgang 131 des dritten Mono-Flops 107 ist mit dem R-Eingang des zweiten Flip-Flops 111 verbunden.

Der Q-quer-Signalausgang des ersten Flip-Flops 110 ist über eine erste Steuerleitung 112 an einen Steuereingang einer Zähler- und Auswerteeinheit 113, an einen Eingang eines NAND-Gliedes 114 und an einen Eingang eines ODER-Gliedes 115 angeschlossen. Der Q-quer-Signalausgang des zweiten Flip-Flops 111 ist über eine zweite Steuerleitung 116 mit einem weiteren Steuereingang der Zähler- und Auswerteeinheit 113, dem anderen Eingang des NAND-Gliedes 114 und dem anderen Eingang des ODER-Gliedes 115 verbunden.

Der Q-Ausgang 134 des ersten Flip-Flops 110 ist an eine erste Verzögerungsschaltung 135 angeschlossen, die das sie beaufschlagende Signal des Q-Ausgangs 134 mit einer zeitlichen Verzögerung an ihrem Ausgang 136 anlegt, wobei die zeitliche Verzögerung kleiner als die Hälfte der maximale auftretenden und erfaßbaren Fehlergröße in der Materialbahn und größer als die Hälfte der kleinsten auftretenden und erfaßbaren Fehlergröße ist. Das Ausgangssignal 136 der ersten Verzögerungsschaltung 135 ist Logisch-Null, wenn an dem Steuereingang 143 eine Logisch-Null anliegt. Das Ausgangssignal 136 der ersten Verzögerungsschaltung 135 beaufschlagt einen dritten Inverter 137, dessen Ausgang mit dem Takteingang T des zweiten Flip-Flops 111 verbunden ist. Dementsprechend sind die Ausgänge des zweiten Flip-Flops 111 in einer Zeitspanne von kurz nach Auftreten eines ersten Detektorsignals 102 bis kurz nach seinem Ende unveränderbar. Die genannte kurze Zeitspanne entspricht der Verzögerungszeit der ersten Verzögerungsschaltung 135.

Der Q-Ausgang 138 des zweiten Flip-Flops 111 ist an eine zweite Verzögerungsschaltung 139 angeschlossen, die das sie beaufschlagende Signal des Q-Ausgangs 138 mit einer zeitlichen Verzögerung an ihrem Ausgang 140 anlegt, wobei die zeitliche Verzögerung der zeitlichen Verzögerung der ersten Verzögerungsschaltung 135 entspricht. Das Ausgangssignal 140 der zweiten Verzögerungsschaltung 139 ist Logisch-Null, wenn an dem Steuereingang 141 eine Logisch-Null anliegt. Das Ausgangssignal 140 der zweiten Verzögerungsschaltung 139 beaufschlagt einen vierten Inverter 142, dessen Ausgang mit dem Takteingang T des ersten Flip-Flops 110 verbunden ist. Dementsprechend bleiben die Ausgänge des ersten Flip-Flops 110 in einer Zeitspanne von kurz nach Auftreten eines zweiten Detektorsignals 106 bis kurz nach seinem Ende unverändert. Die genannte kurze Zeitspanne entspricht wiederum der Verzögerungszeit der zweiten Verzögerungsschaltung 139.

Bei einem reflektierendem Farbfehler schalten beide Flip-Flops 110 und 111 im wesentlichen gleichzeitig um. In diesem Fall werden die Verzögerungsschaltungen 135 und 139 über die Steuereingänge 143 bzw. 141 für eine Zeit, die etwas größer als die der Fehlstelle entsprechenden Scanzeit ist, totgeschaltet.

Die Ausgänge des NAND-Gliedes 114 und des ODER-Gliedes 115 sind mit einer dritten bzw. vierten Steuerleitung 117 bzw. 118 an weitere Steuereingänge der Zähler- und Auswerteeinheit 113 angeschlossen. Ein Taktsignal 119, das eine Frequenz von 50 Megahertz aufweist, ist mit einem Zähleingang der Zähler- und Auswerteeinheit 113 verbunden.

Der Zähler der Zähler- und Auswerteeinheit 113 wird von einer logischen Null auf der Steuerleitung 117 gestartet und bei einem Rücksprung des Signals auf der Steuerleitung 117 auf Logisch-Eins gestoppt. Die in der Zählzeitspanne aufgelaufenen Taktimpulse des Taktgenerators 119 gestatten die Bestimmung der räumlichen Ausdehnung des Fehlers. Eine mit dem Schwingspiegelantrieb verbundene Synchronisationsleitung 120 ist hierfür an die Zähler- und Auswerteeinheit 113 angeschlossen. Über die Synchronisationsleitung 120 wird die Position des Schwingspiegels 6 an die Zähler-und Auswerteeinheit 113 übermittelt. Die Geschwindigkeit des Abtaststrahles über die Materialoberfläche 4 ist nicht konstant und abhängig von der Position des Schwingspiegels 6. Die Zähler- und Auswerteeinheit 113 rechnet die sich aus den während der Fehlstelle eingelaufenen Taktsignalen ergebene Fehlergröße für die entsprechende Position des Schwingspiegels 6 um.

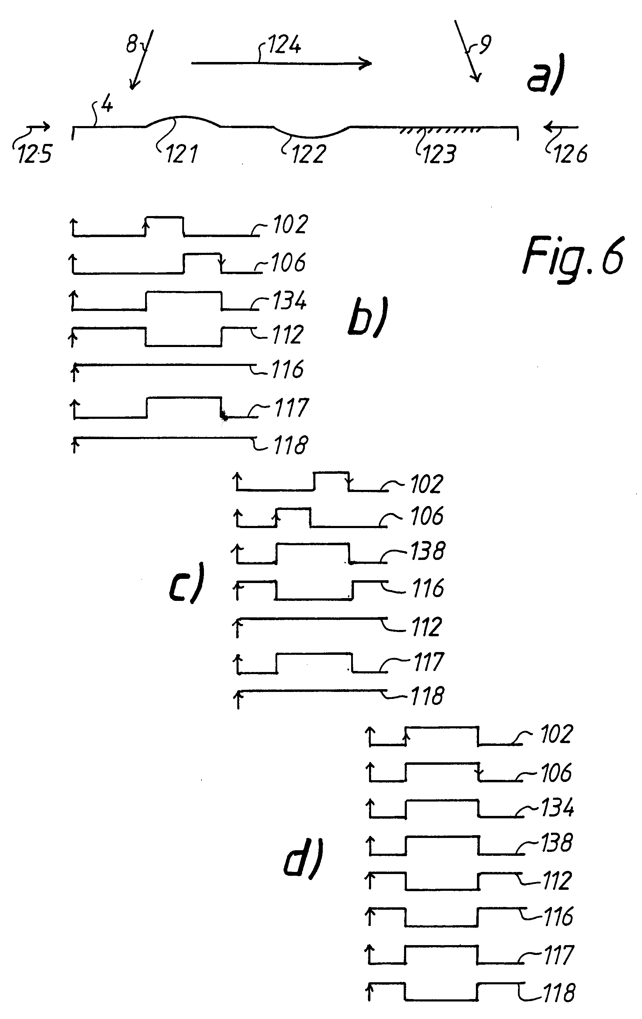

Die Signalkombinationen, die auf den Steuerleitungen 112, 116 und 118 auftreten, gestatten ferner die Klassifizierung des Fehlers als Erhebung 121, Vertiefung 122 oder Farbabweichung 123. Entsprechende Ausgangssignale liegen an den Ausgängen 121, 122 und 123 der Zähler- und Auswerteeinheit 113 an und sind im Zusammenhang mit der Fig. 6 erläutert.

Die Fig. 6a stellt schematisch die Materialoberfläche 4 einer in der Inspektionsvorrichtung gemäß Fig. 1 zu prüfenden Oberflächenbahn dar. Die Materialoberfläche 4 weist, beispielhaft nebeneinander gezeichnet, drei verschiedene Fehler 121, 122 und 123 auf. Der erste Fehler ist eine Erhebung 121 in der Materialoberfläche 4. Bei dem zweiten Fehler handelt es sich um eine Vertiefung 122 in der Materialoberfläche 4. Der dritte, in der Struktur der Materialoberfläche 4 liegende Fehler ist eine höher reflektierende Farbabweichung 123.

Die Abtastrichtung zwischen den zwei Randstrahlen 8, 9 ist durch den gerichteten Abtastpfeil 124 veranschaulicht.

Ein erster, mit D1 versehener Richtungspfeil 125 kennzeichnet die Beobachtungsrichtung der ersten optoelektronischen Detektoranordnung 14. Ein zweiter, mit D2 versehener Richtungspfeil 126 kennzeichnet die Beobachtungsrichtung der zweiten optoelektronischen Detektoranordnung 15. Der gerichtete Abtastpfeil 124 zeigt an, daß die Bewegung des Abtastfleckes 3 von der ersten optoelektronischen Detektoranordnung 14 weg hin zur zweiten optoelektronischen Detektoranordnung 15 gerichtet ist.

Die Figuren 6b, 6c bzw. 6d zeigen zeitliche Signalverläufe in der Signalverarbeitungseinrichtung 101 bei einer Erhebung 121, einer Vertiefung 122 bzw. einer Farbabweichung 123, wobei die Farbabweichung 123 eine größere Reflektivität der Materialoberfläche 4 aufweist.

In jeder der Figuren 6b, 6c und 6d liegen die impulsgeformten Eingangssignale 102 bzw. 106 der Signalverarbeitungseinrichtung 101 zugrunde, die aus den zeitlichen Signalverläufen 22 und 23 für die beiden Detektoren 18 und 21 hervorgehen. Mit den Aufwärts-bzw. Abwärtspfeilen sind die die Flip-Flops 110 und 111 setzenden Flanken verdeutlicht.

Die Fig. 6b zeigt Signalverläufe für eine Erhebung 121, die Fig. 6c zeigt Signalverläufe für eine Vertiefung 122 und die Fig. 6d zeigt Signalverläufe für eine reflektierende Farbabweichung 123. Die Q-bzw. Q-quer-Ausgänge 112 bzw. 134 des ersten Flip-Flops 110 und die Q- bzw. Q-quer-Ausgänge 116 bzw. 138 des zweiten Flip-Flops 111 sind jeweils gezeichnet. Aus diesen Signalen werden mit Hilfe der Logik-Gatter 114 und 115 die weiteren Steuersignale 117 und 118 erzeugt.

Aus der Figur 6b ist zu erkennen, daß eine Erhebung 121 durch eine logische Null auf der Steuerleitung 112 gekennzeichnet ist, wobei die Größe der Fehlstelle durch die Anzahl der auf der Taktleitung von dem Taktgenerator 119 eingelaufenen Taktimpulse in die Zähler- und Auswerteeinheit 113 charakterisiert ist.

Die Figur 6c zeigt, daß eine Vertiefung 122 durch eine logische Null auf der Steuerleitung 116 gekennzeichnet ist, wobei die Größe der Fehlstelle ebenfalls durch die Anzahl der auf der Taktleitung 119 eingelaufenen Taktimpulse in die Zähler- und Auswerteeinheit 113 charakterisiert ist.

In der Figur 6d sind Signale bei einer Farbabweichung 123 dargestellt, die durch eine logische Null auf der Steuerleitung 118 gekennzeichnet ist, wobei die Größe der Fehlstelle analog feststellbar ist.

## Patentansprüche

1. Vorrichtung zur optischen Inspektion von bewegten Materialoberflächen (4), mit einem die Materialoberfläche (4) periodisch und entlang einer Abtastlinie quer zur Materialbewegungsrichtung abtastenden Abtaststrahl (5; 8, 9), mit einer Lichtempfängeranordnung (14, 15) zur Aufnahme des beim Überstreichen der Materialoberfläche (4) reflektierten Lichtes (19, 22), wobei die Lichtempfängeranordnung (14, 15) zwei einander zugeordnete, optoelektronische Detektoranordnungen (18, 21) umfaßt, die beidseitig der zu inspizierenden bewegten Materialoberfläche (4) angeordnet und mit ihren optischen Achsen (17) fluchtend mit der Abtastlinie auf die Materialoberfläche (4) ausgerichtet sind, mit einer Signalverarbeitungseinrichtung (101) zur Erfassung und Klassifizierung der Oberflächendefekte (11, 12, 121, 122, 123), die mit den Detektoranordnungen (18, 21) verbunden ist und die Mittel zum Erfassen des zeitlichen Verlaufs der Ausgangssignale (102, 106) der beiden Detektoranordnungen (18, 21) aufweist, **dadurch gekennzeichnet**, daß die Detektoranordnungen (18, 21) über jeweils ein Linsensystem (16 bzw. 20) zur Abbildung der Abtastlinie auf die Detektoren verfügen und daß die Signalverarbeitungseinrichtung (101) zur Erfassung der Zeitpunkte der Amplitudenveränderung (24 - 27) der Ausgangssignale (102, 106) über einen Schwellwert hinaus zwei bistabile Multivibratoren (110 und 111) mit jeweils einem Takteingang (T) aufweist, deren Setz- bzw Rücksetz-Eingänge (S bzw. R) mit einem Detektorsignal (102, 106, 130, 132) und dem invertierten jeweils anderen Detektorsignal (131, 133) beaufschlagt sind, wobei die erste an einem der bistabilen Multivibratoren (110 bzw. 111) auftretende, auf einen Oberflächendefekt hinweisende Amplitudenveränderung (24, 25, 26 oder 27) den Takteingang (T) des jeweils anderen bistabilen Multivibrators (111 bzw. 110) sperrt.

2. Vorrichtung nach Anspruch 1, dadurch gekennzeichnet, daß zwischen den Ausgängen der bistabilen Multivibratoren (110 bzw. 111) und den jeweiligen Takteingängen (T) Verzögerungsschaltungen (135 bzw. 139) vorgesehen sind, mit denen die Sperrung der Eingänge des jeweils anderen bistabilen Multivibrators (111 bzw. 110) mit einer Verzögerungszeit im Bereich von der Hälfte der der Kleinsten auftretenden und erfaßbaren Fehlergröße einer Fehlstelle entsprechenden Zeit bis zu der Hälfte der der maximal auftretenden und erfaßbaren Fehlergröße entsprechenden Zeit verzögerbar ist, wobei mit Hilfe der Verzögerungsschaltungen (135 bzw. 139) bei einer einer auftretenden Fehlstelle entsprechenden Ausgangssignaländerung der jeweils andere bistabile Multivibrator (111 bzw. 110) sperrbar ist.

3. Vorrichtung nach einem der Ansprüche 1 oder 2, dadurch gekennzeichnet, daß die Signalverarbeitungseinrichtung (101) eine Zähler- und Rechenschaltung (113, 119, 120) umfaßt, wobei die Zähler- und Rechenschaltung (113, 119, 120) Taktimpulse eines Taktgenerators (119) beim Auftreten eines von den bistabilen Multivibratoren (110, 111) erzeugbaren Steuersignals (117) zählt, deren gezählte Anzahl mit Hilfe eines die Position des Schwingspiegels (6) anzeigenden Steuersignals (120) in eine Fehlstellengröße umrechenbar sind.

4. Vorrichtung nach einem der Ansprüche 1 bis 3, dadurch gekennzeichnet, daß die Signalverarbeitungseinrichtung (101) die Art von Fehlstellen klassifizierende Steuerleitungen (112, 116, 118) umfaßt, die mit den Ausgängen der bistabilen Multivibratoren (110, 111) bzw. dem Ausgang (118) von einem von diesen (110, 111) beaufschlagten Logik-Gatter (115) verbunden sind.

5. Vorrichtung nach einem der vorstehenden Ansprüche, dadurch gekennzeichnet, daß die Ablenkung des Abtaststrahles mit Hilfe eines im Brennpunkt (32) eines Parabolspiegels (31) angeordneten Schwingspiegels immer rechtwinklig zur Materialoberfläche (4) erfolgt und daß das spiegelnd von der Materialoberfläche (4) reflektierte Licht eine dritte Detektoranordnung (34) beaufschlagt.

6. Vorrichtung nach Anspruch 5, dadurch gekennzeichnet, daß auf der Materialrückseite spiegelbildlich zum Parabolspiegel (31) ein zweiter Parabolspiegel angeordnet ist, in dessen Brennpunkt zur Erfassung von Löchern im Material (4) eine weitere Detektoranordnung vorgesehen ist.

7. Vorrichtung nach einem der vorstehenden Ansprüche, dadurch gekennzeichnet, daß die Detektoranordnungen (18, 21) zusätzlich zu den auf der gemeinsamen optischen Achse (17) angeordneten Detektorelementen weitere Detektorelemente umfassen.

8. Vorrichtung nach Anspruch 7, dadurch gekennzeichnet, daß jede Detektoranordnung (18, 21) ein etwas oberhalb der optischen Achse (17) auf einer Ebene rechtwinklig zur Materialoberfläche (4) durch die optische Achse (17) verlaufenden Ebene liegendes Detektorelement aufweist.

## Claims

1. Apparatus for the optical inspection of moving material surfaces (4), comprising a scanning beam (5; 8, 9) which periodically scans the material surface (4) along a scanning line transversely to the direction of movement of the material, a light receiver arrangement (14, 15) for receiving the light (19, 22) which is reflected when the scanning beam passes over the material surface (4), wherein the light receiver arrangement (14, 15) includes two mutually associated optoelectronic detector arrangements (18, 21) which are arranged on both sides of the moving material surface (4) to be inspected and which are oriented with their optical axes (17) aligned with the scanning line on to the material surface (4), a signal processing device (101) for acquisition and classification of the surface defects (11, 12, 121, 122, 123), which is connected to the detector arrangements (18, 21) and has means for detecting the variation in respect of time of the output signals (102, 106) of the two detector arrangements (18, 21), characterised in that the detector arrangements (18, 21) each have a respective lens system (16 and 20) for forming the image of the scanning line on the detectors, and that the signal processing device (101) for detection of the moments in time of the variation in amplitude (24-27) of the output signals (102, 106) beyond a threshold has two bistable multivibrators (110 and 111) each having a clock input (T) and whose setting and resetting inputs (S and R respectively) receive a detector signal (102, 106, 130, 132) and the inverted respective other detector signal (131, 133), wherein the first variation in amplitude (24, 25, 26 or 27) which occurs at one of the bistable multivibrators (110 and 111 respectively) and which indicates a surface defect blocks the clock input (T) of the respective other bistable multivibrator (111 and 110 respectively).

2. Apparatus according to claim 1 characterised in that provided between the outputs of the bistable multivibrators (110 and 111 respectively) and the respective clock inputs (T) are delay circuits (135 and 139 respectively) with which blocking of the inputs of the respective other bistable multivibrator (111 and 110 respectively) can be delayed with a delay time in the range of half of the time corresponding to the smallest occurring detectable magnitude of a flaw up to half of the time corresponding to the maximum occurring detectable magnitude, wherein upon a variation in output signal corresponding to a defect which occurs the respective other bistable multivibrator (111 and 110 respectively) can be blocked by means of the delay circuits (135 and 139 respectively).

3. Apparatus according to one of claims 1 and 2 characterised in that the signal processing device (101) has a counter and computing circuit (113, 119, 120), wherein the counter and computing circuit (113, 119, 120) counts clock pulses of a clock generator (119) upon the occurrence of a control signal (117) which can be produced by the bistable multivibrators (110, 111) and the counted number of which can be converted into a defect magnitude by means of a control signal (120) which indicates the position of the oscillating mirror (6).

4. Apparatus according to one of claims 1 to 3 characterised in that the signal processing device (101) includes control lines (112, 116, 118) which classify the kind of defects and which are connected to the outputs of the bistable multivibrators (110, 111) and the output (118) of a logic gate (115) which is acted upon by same (110, 111).

5. Apparatus according to one of the preceding claims characterised in that deflection of the scanning beam by means of an oscillating mirror arranged at the focal point (32) of a parabolic mirror (31) always takes place perpendicularly to the material surface (4) and that the light subjected to specular reflection from the material surface (4) acts on a third detector arrangement (34).

6. Apparatus according to claim 5 characterised in that arranged on the rear side of the material in mirror image relationship with the parabolic mirror (31) is a second parabolic mirror, at the focal point of which is disposed a further detector arrangement for the detection of holes in the material (4).

7. Apparatus according to one of the preceding claims characterised in that the detector arrangements (18, 21) include further detector elements in addition to the detector elements arranged on the common optical axis (17).

8. Apparatus according to claim 7 characterised in that each detector arrangement (18, 21) has a detector element disposed somewhat above the optical axis (17) in a plane extending perpendicularly to the material surface (4) through the optical axis (17).

## Revendications

1. Dispositif d'inspection optique de surfaces mobiles (4) de matériaux, comprenant un faisceau explorateur (5; 8, 9) qui explore périodiquement la surface (4) du matériau le long d'une ligne d'exploration transversale à la direction du mouvement du matériau, un agencement récepteur de lumière (14, 15) pour recevoir la lumière (19, 22) réfléchie pendant le balayage de la surface (4) du matériau, l'agencement récepteur de lumière (14, 15) comprenant deux agencements détecteurs optoélectroniques (18, 21) associés l'un à l'autre, et un dispositif de traitement de signaux (101) pour l'acquisition et le classement des défauts de surface (11, 12, 121, 122, 123), qui est relié aux agencements détecteurs (18, 21) et qui comprend des moyens d'acquisition de la forme dans le temps des signaux de sortie (102, 106) des deux agencements détecteurs (18, 21) qui sont disposés de chaque côté de la surface mobile (4) du matériau à inspecter et qui sont orientés de manière que leurs axes optiques (17) soient en alignement avec la ligne d'exploration de la surface (4) du matériau, caractérisé en ce que les agencements détecteurs (18, 21) disposent chacun d'un système de lentilles (16 ou 20) pour former l'image de la ligne d'exploration sur les détecteurs, et en ce que le dispositif de traitement de signaux (101) comprend, pour détecter les points dans le temps de la modification d'amplitude (24 - 27) des signaux de sortie (102, 106) au-dessus d'une valeur de seuil, deux multivibrateurs bistables (110 et 111) comprenant chacun une entrée d'horloge (T), dont les entrées de positionnement et de repositionnement (S ou R) reçoivent un signal détecteur (102, 106, 130, 132) et l'autre signal détecteur respectif inversé (131, 132), la première modification d'amplitude (24, 25, 26 ou 27) qui parvient à l'un des multivibrateurs bistables qui indique un défaut de surface bloquant l'entrée d'horloge de l'autre multivibrateur bistable respectif.

2. Dispositif selon la revendication 1, caractérisé en ce que sont prévues entre les sorties des multivibrateurs bistables (110 ou 111) et les entrées d'horloge respectives (T) des circuits à retard (135 ou 139) au moyen desquels la fermeture des entrées de l'autre multivibrateur bistable respectif (111 ou 110) peut être retardée d'une durée de retard qui est située dans la plage allant de la moitié de la durée correspondant à la dimension la plus faible du défaut qui apparaît et qui peut être détecté d'un emplacement défectueux jusqu'à la moitié de la durée correspondant à la dimension maximale du défaut qui apparaît et qui peut être détecté, l'autre multivibrateur bistable (111 ou 110) pouvant être fermé à l'aide des circuits à retard (135 ou 139) par une modification du signal de sortie correspondant à un emplacement défectueux qui apparaît.

3. Dispositif selon l'une des revendications 1 ou 2, caractérisé en ce que le dispositif de traitement de signaux (101) comprend un circuit de comptage et de calcul (113, 119, 120), le circuit de comptage et de calcul (113, 119, 120) comptant les impulsions d'un générateur d'horloge (119) lorsqu'apparaît un signal de commande (117) qui peut être produit par l'un des multivibrateurs bistables (110, 111), dont le nombre compté peut être transformé par calcul, à l'aide d'un signal de commande (120) indiquant la position du miroir oscillant (6), en une grandeur de position de défaut.

4. Dispositif selon l'une quelconque des revendications 1 à 3, caractérisé en ce que le dispositif de traitement de signaux (101) comprend des conducteurs de commande (112, 116, 118) qui effectuent un classement concernant le type des défauts, conducteurs qui sont reliés aux sorties des multivibrateurs bistables (110, 111) ou à la sortie (118) d'une porte logique (115) soumise à l'influence desdits multivibrateurs (110, 111).

5. Dispositif selon l'une quelconque des revendications précédentes, caractérisé en ce que la déviation du faisceau d'exploration est obtenu à l'aide d'un miroir oscillant disposé au foyer (32) d'un miroir parabolique (31) et est toujours à angle droit par rapport à la surface (4) du matériau, et en ce que la lumière réfléchie de façon spéculaire par la surface (4) du matériau est appliquée à un troisième agencement détecteur (34).

6. Dispositif selon la revendication 5, caractérisé en ce qu'un second miroir parabolique est disposé sur le côté arrière du matériau symétriquement par rapport au miroir parabolique (31), au foyer duquel est prévu un autre agencement détecteur pour détecter des trous dans le matériau (4).

7. Dispositif selon l'une quelconque des revendications précédentes, caractérisé en ce que les agencements détecteurs (18, 21) comprennent d'autres éléments détecteurs en plus des éléments détecteurs disposés sur l'axe optique commun (17).

8. Dispositif selon la revendication 7, caractérisé en ce que chaque agencement détecteur (18, 21) comprend un élément détecteur situé un peu au-dessus de l'axe optique (17) dans un plan à angle droit par rapport à la surface (4) du matériau située dans le plan passant par l'axe optique (17).
